# EUROPÄISCHE PATENTSCHRIFT

(11) **EP 2 399 343 B1**
(45) Veröffentlichungstag und Bekanntmachung des Hinweises auf die Patenterteilung: **08.04.2015**
(21) Anmeldenummer: 10704146.9
(22) Anmeldetag: 16.02.2010
(51) Int. Cl.: H04B 3/54, H04L 12/403, H04L 12/10, H04L 12/40

(54) **VORRICHTUNG UND VERFAHREN ZUM UEBERTRAGEN VON DATEN UND ENERGIE UEBER EINRICHTUNGEN EINES NETZWERKES**
DEVICE AND METHOD FOR TRANSMISSION OF DATA AND POWER SUPPLY OVER FACILITIES OF A NETWORK
DISPOSITIF ET PROCÉDÉ POUR LA TRANSMISSION DES DONNEÉS ET PUISSANCE SUR INSTALLATION D'UN RÉSEAU

(30) Priorität: 23.02.2009 DE 102009001081; 23.02.2009 US 154475 P
(43) Veröffentlichungstag der Anmeldung: 28.12.2011
(73) Patentinhaber: Airbus Operations GmbH, 21129 Hamburg (DE)
(72) Erfinder: BERKHAHN, Sven-Olaf, 21220 Ohlendorf (DE); RIEDEL, Christian, 21640 Bliedersdorf (DE)
(74) Vertreter: Isarpatent
(86) Internationale Anmeldenummer: PCT/EP2010/051914
(87) Internationale Veröffentlichungsnummer: WO 2010/094680

(56) Entgegenhaltungen:
- EP-A1- 1 684 187
- EP-A2- 2 009 526
- WO-A1-2010/052333
- DE-A1- 19 705 643
- DE-A1-102006 004 191
- US-B1- 7 009 996

## Beschreibung

Die vorliegende Erfindung betrifft eine Vorrichtung und ein Verfahren zum Übertragen von Daten und Energie über Einrichtungen eines bestimmten Netzwerkes.

Obwohl auf beliebige Bereiche anwendbar, wird die vorliegende Erfindung in Bezug mit einem Flugzeug oder mit einem Passagierflugzeug näher erläutert.

Das technische Gebiet der Erfindung betrifft insbesondere die Übertragung von Daten über Einrichtungen, wie zum Beispiel Netzwerk-Knoten, eines bestimmten Netzwerkes in einem Flugzeug, insbesondere in einer Flugzeugkabine eines Flugzeuges.

Für die Übertragung von Daten, insbesondere von sicherheitsrelevanten Daten, wie die sicherheitsrelevanten Steuer- und Audio-Daten, zwischen einem zentralen Steuergerät und einer Mehrzahl in der Flugzeugkabine installierter Endgeräte wird in derzeitigen bestehenden Kabinen-Management-Systemen der Anmelderin, dem so genannten Cabin Intercommunication Data System (CIDS), ein spezieller Datenbus, der so genannte CIDS-Datenbus, eingesetzt.

Der derzeitige CIDS-Datenbus basiert auf der Übertragung von Ethernet-Rahmen oder Ethernet-Frames und hat eine Master- oder Bus-Steuervorrichtung, die im zentralen Steuergerät des Flugzeuges angeordnet ist, und eine Mehrzahl von Netzwerk-Knoten, so genannte Decoder-Encoder-Units (DEU), die als Client arbeiten können.

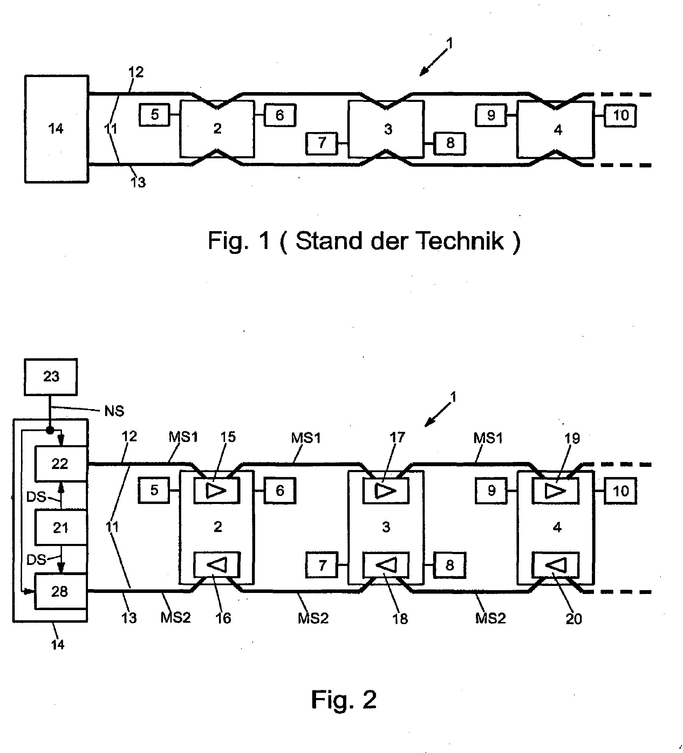

Dazu zeigt Fig. 1 ein schematisches Blockschaltbild eines Ausführungsbeispiels eines herkömmlichen Netzwerkes 1 zur Übertragung von Daten über Netzwerk-Knoten 2-4. Die Netzwerk-Knoten 2-4 sind mittels eines Busses 11 mit einer Bus-Steuervorrichtung 14 gekoppelt. Dabei weist der Bus 11 eine Sendeleitung 12 und eine Empfangsleitung 13 auf. Die Sendeleitung 12 und auch die Empfangsleitung 13 sind durch die Netzwerk-Knoten 2-4 durchgeschleift. An jeden Netzwerk-Knoten 2-4 sind ein oder mehrere Endgeräte 5-10 gekoppelt. Dabei sind in dem Ausführungsbeispiel nach Fig. 1 nicht-sicherheitsrelevante die Endgeräte 5, 6 an dem Netzwerk-Knoten 2 gekoppelt. Dabei basiert der Bus 11 oder Datenbus auf dem physikalischen 10 MBit/s Ethernet-Layer. Der Kanalzugriff auf die Sendeleitung 12 und die Empfangsleitung 13 erfolgt durch ein statisch a-priori definiertes und deterministisches Zeitschlitzverfahren, das von der Bus-Steuervorrichtung 14 gesteuert wird. In den durch das Zeitschlitzverfahren definierten Zeitschlitzen werden die Daten für die an die Netzwerk-Knoten 2-4 gekoppelten Endgeräte 5-10 mittels Rahmen oder Daten-Rahmen (Frames) übertragen.

Neben den sicherheitsrelevanten Daten, wie beispielsweise sicherheitsrelevanten Steuerdaten, kann ein jeweiliger Rahmen auch nicht-sicherheitsrelevante Audio-Daten aufweisen, die als Broadcast an alle mit dem Bus 11 gekoppelten Netzwerk-Knoten 2-4 übertragen werden. Dabei ist der zeitliche Abstand zweier Zeitschlitze so festgelegt, dass er exakt einer Inversen der Abtastrate der Audio-Daten entspricht. Durch den Aufbau des CIDS-Datenbusses und des verwendeten statisch a-priori definierten und deterministischen Zeitschlitzverfahrens werden die sicherheitsrelevanten Daten mit hoher Synchronität und zeitlich deterministisch mit minimaler Latenzzeit an alle gekoppelten Endgeräte 5-10 übertragen. Dies ist erforderlich, um Hall-Effekte und Echo-Effekte bei der Wiedergabe der Audio-Daten über die zahlreichen Lautsprecher in der Flugzeugkabine zu vermeiden. Der Datenbus oder Bus 11 ist weiter hoch zuverlässig, da der Ausfall einzelner Netzwerk-Knoten 2-4 keine Auswirkung auf die Datenübertragung an die verbleibenden Netzwerk-Knoten hat, da die Datenleitungen, die Sendeleitung 12 und die Empfangsleitung 13 durch die Netzwerk-Knoten 2-4 durchgeschleift werden und nicht durch aktive Treiberbausteine durchgeführt werden. Allerdings ist es mit dem derzeitigen Datenbus nachteiligerweise nicht möglich, auch IP-Datenpakete über diesen CIDS-Datenbus zu übertragen.

Weiter wird in der Flugzeugkabine vermehrt der AFDX (Avionics Full DupleX)-Switched-Ethernet-Datenbus für die Übertragung der sicherheitsrelevanten Daten eingesetzt. Dieser Datenbus ist in der ARINC Norm 665 spezifiziert und nutzt das IP-Protokoll für die Datenübertragung.

Die AFDX-Netzwerktopologie besteht aus einem oder mehreren Switchen, an denen die Endgeräte angeschlossen sind. Die Datenübertragung zwischen zwei Endgeräten erfolgt dabei stets über zumindest einen dieser AFDX-Switche.

Durch diese spezifische, auf den AFDX-Switchen basierte Netzwerktopologie kommt es bei einer Ende-zu-Ende-Übertragung zwischen zwei Endgeräten nachteiligerweise zu unterschiedlichen Latenzzeiten und zu Jitter-Effekten, da die Daten in jedem Switch zumindest kurzzeitig zwischengespeichert werden müssen. Die Dauer der Zwischenspeicherung in den jeweiligen Netzwerk-Knoten hängt maßgeblich von der Auslastung des Netzwerkes ab und ist damit a priori nicht bekannt. Die Dauer der Zwischenspeicherung ist durch eine statische, a priori definierte Konfiguration der Datenströme begrenzt, so dass keine Daten verworfen werden und ein Quasi-Determinismus gewährleistet wird.

Wie oben bereits ausgeführt, erlaubt der derzeitige CIDS-Datenbus nachteiligerweise keine Übertragung von IP-Datenpaketen. Weiter ist der AFDX-Datenbus aufgrund der unterschiedlichen Latenzzeiten und der Jitter-Effekte bei der Datenübertragung zu den Endgeräten nicht für eine synchrone Übertragung der Audio-Daten zu allen Lautsprechern in der Kabine geeignet.

Weiter ist es wünschenswert, einen Ethernet-Datenbus höherer Datenübertragungsrate, beispielsweise 100 Mbit/s, einsetzen zu können, insbesondere auch um neue oder zusätzliche Funktionen zu integrieren. Ein Beispiel für einen solchen Ethernet-Datenbus höherer Datenübertragungsrate ist der 100BaseT-Ethernet-Datenbus. Bei dem 100BaseT-Ethernet-Datenbus ist es allerdings erforderlich, das Datensignal in jedem Netzwerk-Knoten zu verstärken oder zu regenerieren. Dies ist notwendig, da die physikalische Signalcharakteristik der Datensignale bei dem 100BaseT-Ethernet-Datenbus ohne eine Verstärkung durch das Durchschleifen durch die Netzwerk-Knoten stark verfälscht werden würde. Diese Signalverfälschung würde sich mit jedem Durchschleifen durch einen Netzwerk-Knoten aufsummieren, so dass ein gesicherter Empfang der Datensignale in den hinteren oder nachgeschalteten Netzwerk-Knoten des Datenbusses nicht mehr gewährleistet wäre.

Weil über die Netzwerk-Knoten auch sicherheitsrelevante Daten oder Datensignale übertragen werden, sind die Netzwerk-Knoten sicherheitskritische Geräte des Flugzeuges und sind daher mit einer redundanten Spannungsversorgung neben der herkömmlichen einfachen Kopplung an die Bord-Spannungsversorgung mittels Kabel und Stecker auszustatten.

Neben der Anordnung der Netzwerk-Knoten als sicherheitskritisches System existieren im Flugzeug auch weitere sicherheitskritische Systeme oder Flugzeugsysteme, welche gegenüber anderen Flugzeugsystemen eine höhere Sicherheitsstufe aufweisen.

Aufgrund luftfahrtschutztechnischer Auflagen sind die unterschiedlichen Systeme insbesondere unterschiedlicher Sicherheitsstufen mit verschiedenen redundanten Spannungsversorgungseinrichtungen anzusteuern.

Somit kann ein Fehlerfall in der redundanten Spannungsversorgung eines Systems niedriger Sicherheitsstufe aufgrund der physikalischen Trennung zu der redundanten Spannungsversorgungseinrichtung eines Systems höherer Sicherheitsstufe keine negativen Auswirkungen auf die redundante Spannungsversorgung des Systems höherer Sicherheitsstufe haben.

Herkömmlicherweise sind die redundanten Spannungsversorgungen aus Kabeln und Steckern ausgebildet, welche an die Bord-Spannungsversorgung gekoppelt sind.

Diese redundanten Spannungsversorgungen erfordern allerdings die angesprochenen zusätzlichen Verkabelungen, welche zusätzliche Kosten für das Material, die Montage und den notwendigen Service verursachen.

EP 1 684 187 beschreibt ein Busgerät mit 2 verschiedenen Spannungen für die zwei Versorgungsanschließe des Busses.

Die Druckschrift US 5,903,607 A beschreibt ein Verfahren und eine Vorrichtung zum Codieren und bidirektionalen Übertragen von Daten von einem Master zu einem Slave.

Weiter beschreibt die Druckschrift US 2009/0230501 A1 ein System und eine Vorrichtung zur Unterstützung einer synchronen Systemkommunikation und von synchronen Operationen.

Ferner zeigt die Druckschrift DE 10 2006 004 191 B4 ein deterministisches Kommunikationssystem. Hierbei wird während einer Initialisierungsphase die Identität der Systemteilnehmer durch eine Zentraleinheit überprüft. Weiter wird während einer Konfigurationsphase ein vorgegebener Datenrahmen mit einem ersten Synchronisierungssignal, der Teilnehmer-Adresse eines Systemteilnehmers, einem Nutzdaten-Feld und einem zweiten Synchronisierungssignal durch die Zentral-Einheit über den Kontrollbus übermittelt.

Weiterhin beschreibt die Druckschrift US 5,539,388 A ein Telemetrie- und Steuersystem.

Demnach ist es eine Aufgabe der vorliegenden Erfindung, eine kostengünstige Lösung für getrennte redundante Spannungsversorgungen für über einen Bus gekoppelte Einrichtungen unterschiedlicher Flugzeugsysteme zu schaffen.

Erfindungsgemäß wird diese Aufgabe durch eine Vorrichtung zum Übertragen von Daten und Energie über Einrichtungen eines bestimmten Netzwerkes mit den Merkmalen des Patentanspruchs 1 und durch ein Verfahren zum Übertragen von Daten und Energie über Einrichtungen eines bestimmten Netzwerkes mit den Merkmalen des Patentanspruchs 14 gelöst.

Demgemäß wird eine Vorrichtung zum Übertragen von Daten und Energie über Einrichtungen eines bestimmten Netzwerkes (1) eines Flugzeuges vorgeschlagen, welches aufweist:
- zumindest zwei Einrichtungen;
- einen Bus mit einer Sendeleitung und einer Empfangsleitung, welcher die Einrichtungen koppelt;
- eine mit dem Bus gekoppelte Bus-Steuervorrichtung, welche aufweist:
   ein erstes Mittel, welches dazu eingerichtet ist, eine Übertragung von gemäß den bestimmten Netzwerk definierten Daten als Daten-Spannungssignale über die Sendeleitung und über die Empfangsleitung zu steuern,
   ein zweites Mittel, welches dazu eingerichtet ist, die Daten-Spannungssignale auf der Sendeleitung mit zur Spannungsversorgung der Einrichtungen eines ersten Flugzeug-Systems geeigneten ersten Versorgungs-Spannungssignalen zu beaufschlagen, und
   ein drittes Mittel, welches dazu eingerichtet ist, die Daten-Spannungssignale auf der Empfangsleitung mit zur Spannungsversorgung der Einrichtungen eines zweiten Flugzeugsystems geeigneten zweiten Spannungssignalen zu beaufschlagen.

Das jeweilige Mittel, das erste, zweite und dritte Mittel sowie das im Weiteren erwähnte Auskoppel-Mittel oder Einkoppel-Mittel, kann hardwaretechnisch oder auch hardware- und softwaretechnisch implementiert sein. Bei einer hardwaretechnischen Implementierung kann das jeweilige Mittel als Vorrichtung, zum Bespiel als Computer oder Microprozessor, Einrichtung oder auch als Teil eines Systems, zum Beispiel als Computer-System, ausgebildet sein. Bei einer hardware- und softwaretechnischen Implementierung kann das jeweilige Mittel als Computerprogrammprodukt, als eine Funktion, als eine Routine, als Teil eines Programmcodes oder als ausführbares Objekt ausgebildet sein.

Des Weiteren wird ein Flugzeug mit einer wie oben beschriebenen Vorrichtung zum Übertragen von Daten und Energie über Netzwerk-Knoten eines bestimmten Netzwerkes vorgeschlagen.

Ferner wird ein Verfahren zum Übertragen von Daten und Energie über Einrichtungen eines bestimmten Netzwerkes eines Flugzeuges vorgeschlagen, welches folgende Schritte hat:
a) Koppeln von zumindest zwei Einrichtungen mittels eines Busses mit einer Sendeleitung und einer Empfangsleitung;
b) Steuern einer Übertragung von gemäß den bestimmten Netzwerk definierten Daten als Daten-Spannungssignale über die Sendeleitung und über die Empfangsleitung,
c) Beaufschlagen der Daten-Spannungssignale auf der Sendeleitung mit zur Spannungsversorgung der Einrichtungen eines ersten Flugzeug-Systems geeigneten ersten Versorgungs-Spannungssignalen; und
d) Beaufschlagen der Daten-Spannungssignale auf der Empfangsleitung mit zur Spannungsversorgung der Einrichtungen eines zweiten Flugzeugsystems geeigneten zweiten Spannungssignalen.

Das Netzwerk ist vorzugsweise als ein Ethernet-Netzwerk, insbesondere als 100 MBit/s Ethernet-Netzwerk ausgebildet. Die Netzwerk-Knoten und Endgeräte sind jeweils an die herkömmliche Bord-Spannungsversorgung des Flugzeuges mittels Stecker und Kabel gekoppelt.

Ein Vorteil der vorliegenden Erfindung liegt darin, dass über einen einzigen Bus mit einer Sendeleitung und einer Empfangsleitung Daten (als Daten-Spannungssignale) und getrennte redundante Spannungsversorgungen für unterschiedliche Flugzeugsysteme des Flugzeuges übertragen werden können.

Durch die Übertragung der ersten Versorgungsspannungssignale für das erste Flugzeugsystem über die Sendeleitung und die Übertragung der zweiten Versorgungsspannungssignale für das zweite Flugzeugsystem über die Empfangsleitung sind die redundanten Spannungsversorgungen für das erste Flugzeugsystem und das zweite Flugzeugsystem physikalisch voneinander getrennt. Beide über die Sendeleitung und die Empfangsleitung übertragenen Versorgungsspannungen sind zu der herkömmlichen Spannungsversorgung mittels an das Bordnetz gekoppelter Stecker und Kabel redundant.

Durch die Verwendung des inhärent für die Übertragung der Daten vorgesehenen Busses oder Datenbusses für die Bereitstellung der redundanten Spannungsversorgungen für die unterschiedlichen Flugzeugsysteme ist die vorgeschlagene Lösung kostengünstig aufgrund der nicht mehr extra benötigten Verkabelungen.

Weiter werden das zweite Mittel und das dritte Mittel der Bus-Steuervorrichtung insbesondere aus der Not-Spannungsversorgung des Flugzeuges gespeist, so dass auch bei Ausfall der normalen Spannungsversorgung oder Bord-Spannungsversorgung im Flugzeug die Not-Spannung der Not-Spannungsversorgung dem zweiten Mittel und dem dritten Mittel zur Verfügung stehen und damit auch die Versorgungs-Spannungssignale bei Ausfall der Bord-Spannungsversorgung bereitgestellt werden können. Über die Not-Spannungsversorgung werden alle sicherheitsrelevanten Systeme und Geräte im Flugzeug versorgt. Die Versorgungs-Spannungssignale werden dabei auf die Daten-Spannungssignale beaufschlagt und über den Bus übertragen.

In der jeweiligen Einrichtung, beispielsweise in dem jeweiligen Netzwerk-Knoten, können die Versorgungs-Spannungssignale und die Daten-Spannungssignale durch geeignete Einrichtungen oder Auskoppeleinrichtungen getrennt werden. Dann kann das jeweilige, über den Bus bereitgestellte erste oder zweite Versorgungs-Spannungssignal an die wesentlichen Komponenten im Netzwerk-Knoten, beispielsweise einer Verstärkungseinrichtung oder einer Auswahl der gekoppelten Endgeräte, weitergeleitet werden, die insbesondere sicherheitskritische Einrichtungen sind. Fällt demnach das normale Flugzeug-Spannungsnetzwerk oder Bord-Netzwerk aus oder versagt das jeweilige Spannungsnetzteil des Netzwerk-Knotens, dann werden die wesentlichen Komponenten des Netzwerk-Knotens weiterhin durch die redundante Spannungsversorgung der jeweiligen Versorgungs-Spannungssignale versorgt und können somit weiterhin Daten, insbesondere sicherheitskritische Daten, übertragen.

In den Unteransprüchen finden sich vorteilhafte Ausgestaltungen und Verbesserungen der Erfindung.

Gemäß einer bevorzugten Weiterbildung sind die zumindest zwei Einrichtungen als zumindest zwei Netzwerk-Knoten oder als zumindest ein Netzwerk-Knoten und zumindest ein gekoppeltes Endgerät ausgebildet.

Gemäß einer weiteren bevorzugten Weiterbildung umfassen die zumindest zwei Einrichtungen eine Mehrzahl von Netzwerk-Knoten mit einer jeweiligen Anzahl gekoppelter Endgeräte.

Gemäß einer weiteren bevorzugten Weiterbildung hat das erste Flugzeugsystem eine höhere Sicherheitsstufe und das zweite Flugzeugsystem eine niedrigere Sicherheitsstufe.

Gemäß einer weiteren bevorzugten Weiterbildung ist das erste Flugzeugsystem als ein Kabinen-Management-System des Flugzeuges und das zweite Flugzeugsystem als ein Leselampen-System mit Leselampen in der Kabine des Flugzeuges ausgebildet.

Gemäß einer weiteren bevorzugten Weiterbildung ist das erste Mittel dazu eingerichtet, die Übertragung von gemäß dem bestimmten Netzwerk definierten ersten Rahmen mit sicherheitsrelevanten Daten und zweiten Rahmen mit nicht-sicherheitsrelevanten Daten in einer vorbestimmten Abfolge als die Daten-Spannungssignale über den Bus zu steuern, dabei einen jeweiligen zeitlichen Abstand von zwei jeweiligen über die Sendeleitung und von zwei jeweiligen über die Empfangsleitung übertragen ersten Rahmen in Abhängigkeit einer bestimmten Abtastrate des Busses durch die gekoppelten Endgeräte einzustellen und eine Übertragung zumindest eines jeweiligen zweiten Rahmens über die Sendeleitung und über die Empfangsleitung innerhalb des jeweiligen zeitlichen Abstandes zu steuern.

Ein Vorteil dieser bevorzugten Weiterbildung liegt darin, dass eine gemeinsame Übertragung von sicherheitsrelevanten Daten mit fest definiertem Zeitabstand bei minimaler Latenz und bei minimalem Jitter und von nicht-sicherheitsrelevanten Daten, wie beispielsweise IP-Datenpaketen, und zugleich redundanten Spannungsversorgungen für Einrichtungen unterschiedlicher Flugzeugsysteme bereitgestellt werden kann.

Gemäß einer weiteren bevorzugten Weiterbildung haben die Netzwerk-Knoten jeweilige Verstärkungs-Einrichtungen zur Verstärkung der Signale auf der Sendeleitung und der Empfangsleitung, wobei das zweite Mittel die ersten Versorgungs-Spannungssignale derart ausbildet, dass diese zur Spannungsversorgung der Verstärkungs-Einrichtungen der Netzwerk-Knoten geeignet sind.

Gemäß einer weiteren bevorzugten Weiterbildung stellt das zweite Mittel die ersten Versorgungs-Spannungssignale derart bereit, dass diese zur Spannungsversorgung der Verstärkungs-Einrichtungen der Netzwerk-Knoten und einer bestimmten Auswahl der gekoppelten Endgeräte, welche zu dem ersten Flugzeugsystem zugehörig sind, geeignet sind.

Gemäß einer weiteren bevorzugten Weiterbildung überlagert das zweite Mittel die von dem ersten Mittel bereitgestellten Daten-Spannungssignale den ersten Versorgungs-Spannungssignalen zur Ausbildung erster modulierter Spannungssignale und koppelt die ersten modulierten Spannungssignale in die Sendeleitung ein.

Gemäß einer weiteren bevorzugten Weiterbildung überlagert das dritte Mittel die von dem ersten Mittel bereitgestellten Daten-Spannungssignale den zweiten Versorgungs-Spannungssignalen zur Ausbildung zweiter modulierter Spannungssignale und koppelt die zweiten modulierten Spannungssignale in die Empfangsleitung ein.

Gemäß einer weiteren bevorzugten Weiterbildung weist die jeweilige Einrichtung, insbesondere der jeweilige Netzwerk-Knoten, eine Auskoppeleinrichtung auf, welche ein erstes Auskoppel-Mittel und ein zweites Auskoppel-Mittel hat. Das erste Auskoppel-Mittel ist dazu eingerichtet, die ersten Versorgungs-Spannungssignale aus den über die Sendeleitung übertragenen, ersten modulierten Spannungssignalen auszukoppeln. Weiter ist das zweite Auskoppel-Mittel dazu eingerichtet, die zweiten Versorgungs-Spannungssignale aus den über die Empfangsleitung übertragenen, zweiten modulierten Spannungssignalen auszukoppeln.

Gemäß einer weiteren bevorzugten Weiterbildung weist der jeweilige Netzwerk-Knoten eine Einkoppeleinrichtung auf, welche ein erstes Einkoppel-Mittel und ein zweites Einkoppel-Mittel hat. Das erste Einkoppel-Mittel ist dazu eingerichtet, die von dem ersten Auskoppel-Mittel ausgekoppelten ersten Versorgungs-Spannungssignale zur Übertragung an den jeweiligen nachgeschalteten Netzwerk-Knoten in die Sendeleitung einzukoppeln. Ferner ist das zweite Einkoppel-Mittel dazu eingerichtet, die von dem zweiten Auskoppel-Mittel ausgekoppelten zweiten Versorgungs-Spannungssignale zur Übertragung an den jeweiligen nachgeschalteten Netzwerk-Knoten in die Empfangsleitung einzukoppeln.

Gemäß einer weiteren bevorzugten Weiterbildung sind das zweite Mittel und das dritte Mittel der Bus-Steuervorrichtung zur Energieversorgung mit einer Not-Spannungsversorgungseinrichtung des Flugzeuges gekoppelt.

Ferner werden die zweiten Rahmen mit den nicht-sicherheitsrelevanten IP-Datenpakete insbesondere im Best-Effort-Verfahren oder -Modus übertragen. Vorteilhafterweise wird durch den Einsatz des Best-Effort-Verfahrens für die Übertragung der zweiten Rahmen die Gesamt-Datenübertragungsrate des Busses maximiert. Weiter ist die Echtzeit-Fähigkeit der Übertragung der ersten Rahmen mit den sicherheitsrelevanten Daten durch den Einsatz eines Zeitschlitzverfahrens sichergestellt.

Durch die Übertragung der ersten Rahmen mit den sicherheitsrelevanten Daten und der zweiten Rahmen mit den nicht-sicherheitsrelevanten Daten über einen gemeinsamen, hybriden Datenbus entfällt die Notwendigkeit, einen zu dem herkömmlichen CIDS-Datenbus parallelen Datenbus für die Übertragung der IP-Pakete zu implementieren. Dadurch können Gewicht, Kosten und der Gesamtaufwand für das Netzwerk des Flugzeugs eingespart werden. Weiter können die Kosten für kundenspezifische Anpassungen reduziert werden, da nur ein einziges Netzwerk, und nicht wie bisher zwei Netzwerke, konfiguriert werden muss.

Gemäß einer weiteren bevorzugten Weiterbildung wird der jeweilige zeitliche Abstand als ein Zeitschlitz ausgebildet, welcher einer Inversen der Abtastrate der Audio-Daten durch die gekoppelten Endgeräte entspricht.

Der erste Rahmen kann neben den sicherheitsrelevanten Daten auch Audio-Daten umfassen, die als Broadcast an alle Netzwerk-Knoten übertragen werden. In einem solchen Fall kann der jeweilige Zeitschlitz des Zeitschlitzverfahrens derart eingestellt werden, dass er einer Inversen der Abtastrate der Audio-Daten durch die Endgeräte entspricht.

Gemäß einer weiteren bevorzugten Weiterbildung umfasst der jeweilige Zeitschlitz einen ersten Teil-Zeitschlitz zur Übertragung genau eines ersten Rahmens und einen zweiten Teil-Zeitschlitz zur Übertragung zumindest eines zweiten Rahmens.

Die Summe aus dem ersten Teil-Zeitschlitz und dem zweiten Teil-Zeitschlitz ist kleiner als der Zeitschlitz und damit kleiner als der zeitliche Abstand von zwei jeweiligen über die Sendeleitung und von zwei jeweiligen über die Empfangsleitung übertragenen ersten Rahmen.

Gemäß einer weiteren bevorzugten Weiterbildung werden die jeweiligen ersten Rahmen in dem jeweiligen ersten Teil-Zeitschlitz mittels eines statischen und deterministischen Zeitschlitzverfahrens über die Sendeleitung und die Empfangsleitung des Busses übertragen.

Gemäß einer weiteren bevorzugten Weiterbildung werden die mittels der Netzwerk-Knoten gekoppelten Endgeräte mittels des statischen und deterministischen Zeitschlitzverfahrens derart gesteuert, dass innerhalb des jeweiligen vorbestimmten Zeitschlitzes eines Zyklus mit einer bestimmten Anzahl von Zeitschlitzen genau ein bestimmtes Endgerät einen ersten Rahmen über die Sendeleitung empfangen kann und genau einen ersten Rahmen über die Empfangsleitung senden kann.

Vorzugsweise entspricht die Anzahl der Zeitschlitze eines Zyklus der Anzahl der mit dem Bus gekoppelter Endgeräte, so dass in jedem Zyklus an jedes Endgerät genau ein erster Rahmen über die Sendeleitung übertragen werden kann und ferner das jeweilige Endgerät genau einen ersten Rahmen über die Empfangsleitung senden kann.

Gemäß einer weiteren bevorzugten Weiterbildung steuert die Bus-Steuervorrichtung die mittels des Busses gekoppelten Netzwerk-Knoten mittels des Zeitschlitzverfahrens derart, dass innerhalb eines jeweiligen vorbestimmten Zeitschlitzes genau ein bestimmter Netzwerk-Knoten genau einen ersten Rahmen für ein gekoppeltes Endgerät und zumindest einen zweiten Rahmen über die Sendeleitung empfangen kann und genau einen ersten Rahmen eines gekoppelten Endgerätes und zumindest einen zweiten Rahmen über die Empfangsleitung senden kann.

Gemäß einer weiteren bevorzugten Weiterbildung werden die Bus-Steuervorrichtung und die Netzwerk-Knoten mittels des Busses in einer Verkettungs-Anordnung gekoppelt, wobei die Netzwerk-Knoten mittels der Sendeleitung des Busses und mittels der Empfangsleitung des Busses mit der Bus-Steuervorrichtung gekoppelt sind, wobei die Sendeleitung und die Empfangsleitung durch den jeweiligen Netzwerk-Knoten durchgeschleift werden.

Gemäß einer weiteren bevorzugten Weiterbildung werden die ersten Rahmen und die zweiten Rahmen als Ethernet-Rahmen ausgebildet, wobei das bestimmte Netzwerk vorzugsweise als Ethernet-Netzwerk, besonders bevorzugt als 100BaseT-Ethernet-Netzwerk, ausgebildet ist.

Gemäß einer weiteren bevorzugten Weiterbildung wird ein jeweiliger erster Rahmen ausgebildet aus:
- einem ersten Feld mit einer Ethernet-Präambel;
- einem zweiten Feld mit Audio-Daten, insbesondere mit Audio-Broadcast-Daten;
- einem dritten Feld mit einer Adresse, welche zumindest das jeweilige Endgerät des jeweiligen Netzwerk-Knotens angibt;
- einem vierten Feld mit den sicherheitsrelevanten Daten; und
- einem fünften Feld mit einer Ethernet-Prüfsumme.

Gemäß einer weiteren bevorzugten Weiterbildung wird die Adresse des dritten Feldes des ersten Rahmens als ein Adress-Tupel ausgebildet, wobei ein erstes Glied des Adress-Tupels den jeweiligen Netzwerk-Knoten adressiert und ein zweites Glied des Adress-Tupels das jeweilige Endgerät des jeweiligen Netzwerk-Knotens adressiert.

Gemäß einer weiteren bevorzugten Weiterbildung wird ein jeweiliger zweiter Rahmen ausgebildet aus:
- einem ersten Feld mit einer Ethernet-Präambel;
- einem zweiten Feld mit einer Adresse, welche zumindest einen jeweiligen Netzwerk-Knoten angibt;
- einem dritten Feld mit einem IP-Datenpaket; und
- einem vierten Feld mit einer Ethernet-Prüfsumme.

Gemäß einer weiteren bevorzugten Weiterbildung überträgt die Bus-Steuervorrichtung innerhalb eines Zyklus mit der Anzahl N2 von Zeitschlitzen jeweils zumindest einen ersten Rahmen an das jeweilige, mittels des zweiten Gliedes des Adress-Tupels des vierten Feldes des ersten Rahmens adressierte Endgerät über die Sendeleitung in einem jeweiligen Zeitschlitz des Zyklus.

Gemäß einer weiteren bevorzugten Weiterbildung hat der jeweilige Netzwerk-Knoten eine Switch-Einrichtung, welche zwischen der Auskoppeleinrichtung und der Einkoppeleinrichtung angeordnet ist, wobei die Switch-Einrichtung einen jeweiligen ersten Rahmen in Abhängigkeit des zweiten Gliedes des Adresse-Tupels an das entsprechende adressierte Endgerät weiterleitet.

Gemäß einer weiteren bevorzugten Weiterbildung werden die mittels des Busses gekoppelten Netzwerk-Knoten mittels des Zeitschlitzverfahrens von der Bus-Steuervorrichtung derart gesteuert, dass innerhalb eines jeweiligen vorbestimmten Zeitschlitzes genau ein bestimmter Netzwerk-Knoten genau einen ersten Rahmen für ein gekoppeltes Endgerät und zumindest einen zweiten Rahmen über die Sendeleitung empfangen kann und genau einen ersten Rahmen eines gekoppelten Endgerätes und zumindest einen zweiten Rahmen über die Empfangsleitung senden kann.

Gemäß einer weiteren bevorzugten Weiterbildung wird derjenige Netzwerk-Knoten in dem jeweiligen Zeitschlitz des Zyklus berechtigt, nach dem Senden des jeweiligen ersten Rahmens des durch das zweite Glied des Adress-Tupels des in dem jeweiligen Zeitschlitz empfangenen ersten Rahmens adressierten Endgerätes einen oder mehrere zweite Rahmen mittels des Best-Effort-Verfahrens über die Empfangsleitung zu senden.

Gemäß einer weiteren bevorzugten Weiterbildung überträgt die Bus-Steuervorrichtung die jeweiligen zweiten Rahmen in einem Broadcast-Modus über den Bus, wobei die gekoppelten Netzwerk-Knoten jeweils die zweiten Rahmen empfangen, das IP-Paket des zweiten Rahmens extrahieren und das IP-Paket an das jeweilige, durch eine IP-Adresse des IP-Paketes adressierte Endgerät weiterleiten, falls das adressierte Endgerät mit dem jeweiligen Netzwerk-Knoten gekoppelt ist.

Gemäß einer weiteren bevorzugten Weiterbildung wird die Berechtigung des jeweiligen Netzwerk-Knotens zum Senden der zweiten Rahmen über die Empfangsleitung innerhalb des jeweiligen Zyklus mittels einer Einstellung einer Anzahl an diesen jeweiligen Netzwerk-Knoten zu übertragenden ersten Rahmen eingestellt.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: ein schematisches Blockschaltbild eines Ausführungsbeispiels einer herkömmlichen Vorrichtung zum Übertragen von Daten über Netzwerk-Knoten eines bestimmten Netzwerkes;
- Fig. 2: ein schematisches Blockschaltbild eines ersten Ausführungsbeispiels einer Vorrichtung zum Übertragen von Daten und Energie über Einrichtungen eines bestimmten Netzwerkes gemäß der Erfindung;
- Fig. 3a: ein schematisches Schaubild zur Ausbildung der ersten modulierten Spannungssignale aus den Daten-Spannungssignalen und den ersten Versorgungs-Spannungssignalen gemäß der Erfindung;
- Fig. 3b: ein schematisches Schaubild zur Ausbildung der zweiten modulierten Spannungssignale aus den Daten-Spannungssignalen und den zweiten Versorgungs-Spannungssignalen gemäß der Erfindung;
- Fig. 4: ein schematisches Blockschaltbild eines Ausführungsbeispiels eines Netzwerk-Knotens der Vorrichtung nach Fig. 2;
- Fig. 5: ein schematisches Blockschaltbild eines zweiten Ausführungsbeispiels einer Vorrichtung zum Übertragen von Daten und Energie über Einrichtungen eines bestimmten Netzwerkes gemäß der Erfindung;
- Fig. 6: ein schematisches Ablaufdiagramm eines Ausführungsbeispiels eines Verfahrens zum Übertragen von Daten und Energie über Netzwerk-Knoten eines bestimmten Netzwerkes gemäß der Erfindung;
- Fig. 7: ein schematisches Blockschaltbild eines Ausführungsbeispiels eines ersten Rahmens gemäß der Erfindung;
- Fig. 8: ein schematisches Blockschaltbild eines Ausführungsbeispiels eines zweiten Rahmens gemäß der Erfindung;
- Fig. 9: ein schematisches Blockschaltbild eines Ausführungsbeispiels eines Adress-Tupels des ersten Rahmens gemäß Fig. 7; und
- Fig. 10: ein schematisches Blockschaltbild eines Ausführungsbeispiels eines zeitlichen Ablaufs der Übertragung der ersten und zweiten Rahmen über den erfindungsgemäßen Bus.

In den Figuren bezeichnen dieselben Bezugszeichen gleiche oder funktionsgleiche Komponenten, soweit nichts Gegenteiliges angegeben ist.

In Fig. 2 ist ein schematisches Blockschaltbild eines Ausführungsbeispiels einer erfindungsgemäßen Vorrichtung zum Übertragen von Daten DS, R1, R2 und Energie VS1, VS2 über Netzwerk-Knoten 2-4 eines bestimmten Netzwerkes 1 dargestellt.

Die Netzwerk-Knoten 2-4 sind mit einer jeweiligen Anzahl von Endgeräten 5-10 gekoppelt. Ohne Einschränkung der Allgemeinheit sind im Ausführungsbeispiel nach Fig. 2 die jeweiligen Netzwerk-Knoten 2-4 mit jeweils zwei Endgeräten 5-10 gekoppelt. Beispielsweise ist der Netzwerk-Knoten 2 mit den Endgeräten 5 und 6 gekoppelt. Der Bus 11 zur Koppelung der Netzwerk-Knoten 2-4 hat eine Sendeleitung 12 und eine Empfangsleitung 13. Vorzugsweise sind die Sendeleitung 12 und die Empfangsleitung 13 jeweils als eine zweiadrige Leitung ausgebildet. Der Bus 11 koppelt die Netzwerk-Knoten 2-4 in einer Verkettungs-Anordnung (Daisy-Chain). Die Sendeleitung 12 und die Empfangsleitung 13 sind vorzugsweise durch die Netzwerk-Knoten 2-4 durchgeschleift. Zur Verstärkung der Signale auf der Sendeleitung 12 und der Empfangsleitung 13 hat der jeweilige Netzwerk-Knoten 2-4 vorzugsweise jeweils eine Verstärkungseinrichtung 15-20. Weiter ist eine Bus-Steuervorrichtung 14 zur Steuerung des Busses 11 vorgesehen.

Die Bus-Steuervorrichtung 14 ist insbesondere in der zentralen Steuervorrichtung des Flugzeuges integriert. Weiter hat die Bus-Steuervorrichtung 14 ein erstes Mittel 21, das dazu eingerichtet ist, eine Übertragung von gemäß dem bestimmten Netzwerk 1 definierten Daten R1, R2 als Daten-Spannungssignale DS über die Sendeleitung 12 und die Empfangsleitung 13 zu übertragen. Dabei ist das erste Mittel 21 insbesondere dazu eingerichtet, gemäß dem bestimmten Netzwerk 1, beispielsweise dem Ethernet-Netzwerk, definierte erste Rahmen R1, beispielsweise CIDS-Rahmen, mit sicherheitsrelevanten Daten D1 und zweite Rahmen R2 mit nicht-sicherheitsrelevanten Daten D2, beispielsweise IP-Datenpakete oder TCP/IP-Datenpakete, als Daten-Spannungssignale DS in einer vorbestimmten Abfolge über den Bus 11 zu übertragen. Die vorbestimmte Abfolge der ersten Rahmen R1 und der zweiten Rahmen R2 kann beispielsweise eine alternierende Abfolge sein.

Der jeweilige zeitliche Abstand ZS1-ZS2 von zwei jeweiligen über die Sendeleitung 12 und von zwei jeweiligen über die Empfangsleitung 13 übertragenen ersten Rahmen R1 ist in Abhängigkeit einer bestimmten Abtastrate des Busses 11 durch die gekoppelten Endgeräte 5-10 eingestellt. Innerhalb des jeweiligen zeitlichen Abstandes ZS1-ZS2 wird zusätzlich zu einem jeweiligen ersten Rahmen R1 zumindest ein jeweiliger zweiter Rahmen R2 über die Sendeleitung 12 und über die Empfangsleitung 13 übertragen.

Vorzugsweise sind auch die Netzwerk-Knoten 2-4 zu einer solchen Übertragung eingerichtet.

Weiter weist die Bus-Steuervorrichtung 14 ein zweites Mittel 22 auf. Das zweite Mittel 22 ist dazu eingerichtet, die Daten-Spannungssignale DS auf der Sendeleitung 12 mit zur Spannungsversorgung der Einrichtungen eines ersten Flugzeugsystems geeigneten ersten Versorgungs-Spannungssignalen VS1 zu beaufschlagen.

Des Weiteren weist die Bus-Steuervorrichtung 14 ein drittes Mittel 28 auf. Das dritte Mittel 28 ist dazu eingerichtet, die Daten-Spannungssignale DS auf der Empfangsleitung 13 mit zur Spannungsversorgung der Einrichtungen eines zweiten Flugzeugsystems geeigneten zweiten Versorgungs-Spannungssignalen VS2 zu beaufschlagen.

Dabei hat das erste Flugzeugsystem insbesondere eine höhere Sicherheitsstufe als das zweite Flugzeugsystem. Beispielsweise ist das erste Flugzeugsystem als ein Kabinen-Management-System (CIDS-System) des Flugzeuges und das zweite Flugzeugsystem als ein Leselampen-System mit Leselampen in der Kabine des Flugzeuges ausgebildet.

Zumindest das zweite Mittel 22 und das dritte Mittel 28 und vorzugsweise das erste, das zweite Mittel und das dritte Mittel 21, 22, 28 werden von einer Not-Spannung NS einer Not-Spannungsversorgungs-Einrichtung 23 des Flugzeugs gespeist.

Insbesondere stellt das zweite Mittel 22 die ersten Versorgungs-Spannungssignale VS1 derart bereit, dass diese zur Spannungsversorgung der Verstärkungs-Einrichtungen 15-20 der Netzwerk-Knoten 2-4 und einer bestimmten Auswahl der gekoppelten Endgeräte 5-10, die zu dem ersten Flugzeugsystem zugehörig sind, geeignet sind.

Dabei überlagert das zweite Mittel 22 vorzugsweise die von dem ersten Mittel 21 bereitgestellten Daten-Spannungssignale DS den ersten Versorgungs-Spannungssignalen VS1 zur Ausbildung erster modulierter Spannungssignale MS1 und koppelt diese ersten modulierten Spannungssignale MS1 in die Sendeleitung 12 ein.

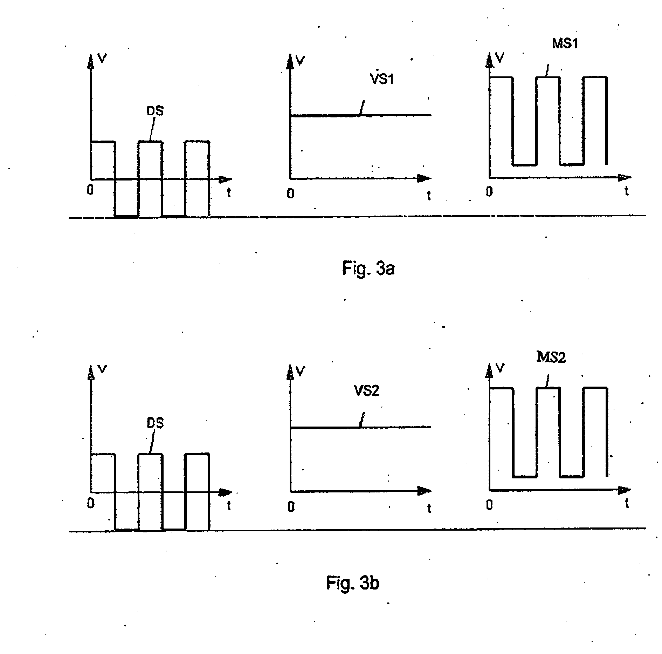

In analoger Weise überlagert das dritte Mittel 28 die von dem ersten Mittel 21 bereitgestellten Daten-Spannungssignale DS den zweiten Versorgungs-Spannungssignalen VS2 zur Ausbildung zweiter modulierter Spannungssignale MS2 und koppelt diese zweiten modulierten Spannungssignale MS2 in die Empfangsleitung 13 ein. Dazu zeigt Fig. 3a ein schematisches Schaubild zur Ausbildung der ersten modulierten Spannungssignale MS1 aus den Daten-Spannungssignalen DS und den ersten Versorgungs-Spannungssignalen VS1. Analog zeigt Fig. 3b die Ausbildung der zweiten modulierten Spannungssignale MS2 aus den Daten-Spannungssignalen DS und den zweiten Versorgungs-Spannungssignalen VS2.

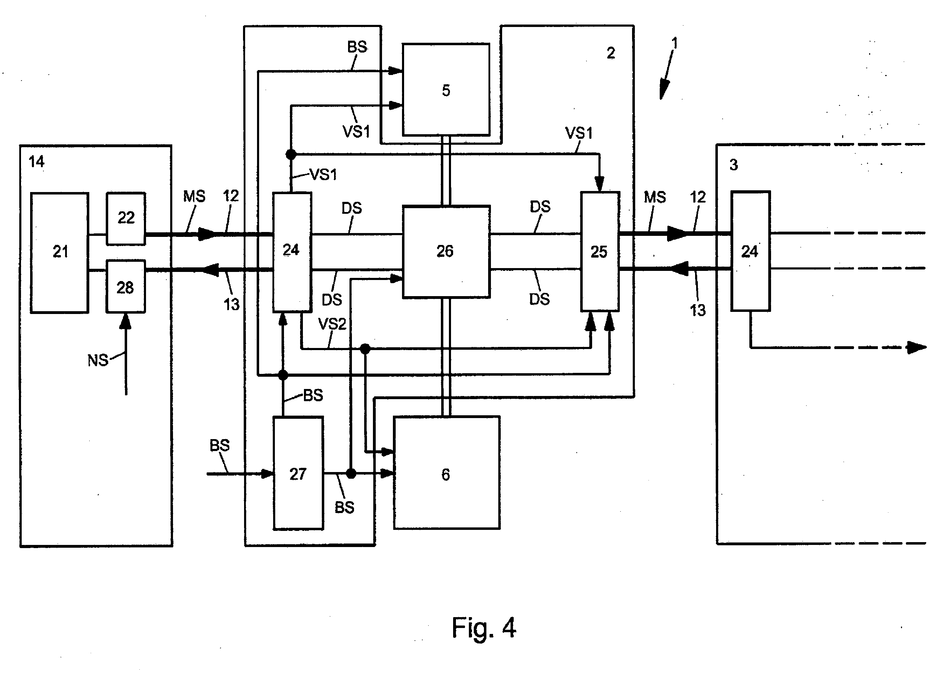

Weiter zeigt Fig. 4 ein schematisches Blockschaltbild eines Ausführungsbeispiels eines Netzwerk-Knotens 2 nach Fig. 2.

Der in Fig. 4 beispielhaft dargestellte Netzwerk-Knoten 2 hat eine Auskoppeleinrichtung 24 und eine Einkoppel-Einrichtung 25.

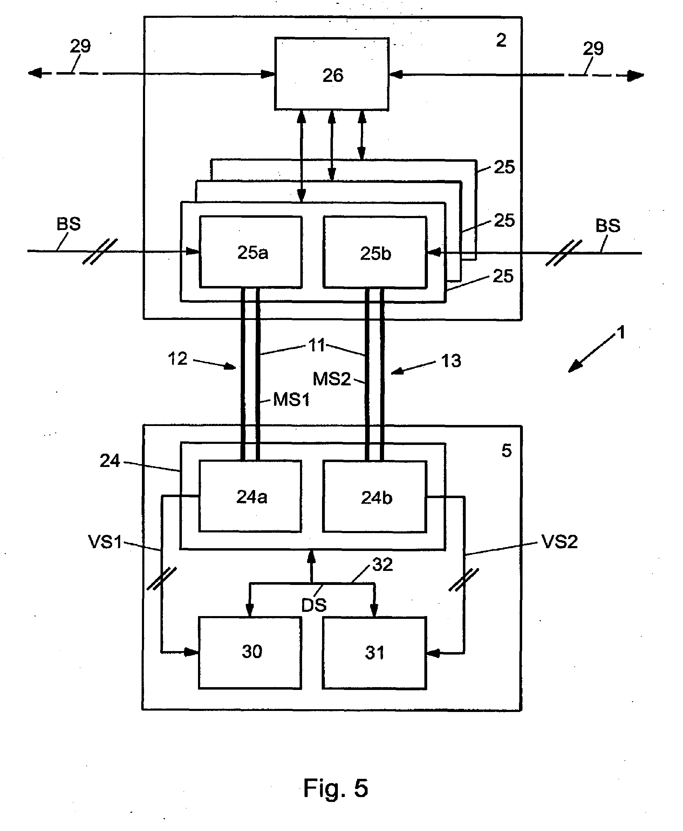

Die Auskoppeleinrichtung 24 hat ein erstes Auskoppel-Mittel 24a und ein zweites Auskoppel-Mittel 24b (siehe dazu Fig. 5). Das erste Auskoppel-Mittel 24a ist dazu eingerichtet, die ersten Versorgungs-Spannungssignale VS1 aus den über die Sendeleitung 12 übertragenen, ersten modulierten Spannungssignalen MS1 auszukoppeln. Weiter ist das zweite Auskoppel-Mittel 24b dazu eingerichtet, die zweiten Versorgungs-Spannungssignale VS2 aus den über die Empfangenleitung 13 übertragenen, zweiten modulierten Spannungssignalen MS2 auszukoppeln.

Weiter hat der jeweilige Netzwerkknoten 2-4 eine Einkoppel-Einrichtung 25, welche ein erstes Einkoppel-Mittel 25a und ein zweites Einkoppel-Mittel 25b aufweist.

Das erste Einkoppel-Mittel 25a ist vorzugsweise dazu eingerichtet, die von dem ersten Auskoppel-Mittel 24a ausgekoppelten ersten Versorgungsspannungssignale VS1 zur Übertragung an den jeweiligen nachgeschalteten Netzwerkknoten 3, 4 in die Sendeleitung 12 einzukoppeln.

Ferner ist das zweite Einkoppelmittel 25b dazu eingerichtet, die von dem zweiten Auskoppelmittel 24b ausgekoppelten zweiten Versorgungsspannungssignale VS2 zur Übertragung an den jeweiligen nachgeschalteten Netzwerk-Knoten 3, 4 in die Empfangsleitung 13 einzukoppeln.

Des Weiteren zeigt Fig. 4, dass der Netzwerk-Knoten 2 eine Spannungsversorgungs-Einrichtung 27 hat, über welche der Netzwerk-Knoten 2 mit der Bord-Spannung BS gespeist wird.

Dabei werden vorzugsweise die Auskoppel-Einrichtung 24, die Einkoppel-Einrichtung 25, die Switch-Einrichtung 26, ein Endgerät 5 des ersten Flugzeugsystems und ein Endgerät 6 des zweiten Flugzeugsystems mit der Bord-Spannung BS mittels der Spannungs-Versorgungseinrichtung 27 über eine jeweilige Stromleitung versorgt. Damit ist auch die Stromversorgung der Auskoppel-Einrichtung 24 und der Einkoppel-Einrichtung 25 redundant ausgebildet, nämlich über das erste Versorgungs-Spannungssignal VS1 und die Bord-Spannung BS.

Weiter hat der Netzwerk-Knoten 2 eine Switch-Einrichtung 26 oder einen Switch. Die Switch-Einrichtung 26 ist zwischen der Auskoppeleinrichtung 24 und der Einkoppeleinrichtung 25 angeordnet. Dabei leitet die Switch-Einrichtung 26 einen jeweiligen ersten Rahmen R1 in Abhängigkeit des zweiten Gliedes G2 des Adress-Tupels AT an das entsprechende adressierte Endgerät 5 weiter.

In Fig. 5 ist ein schematisches Blockschaltbild eines zweiten Ausführungsbeispiels einer Vorrichtung zum Übertragen von Daten und Energie über Einrichtungen eines bestimmten Netzwerkes 1 gemäß der Erfindung dargestellt.

Gemäß dem Ausführungsbeispiel nach Fig. 5 sind die über den Bus 11 gekoppelten Einrichtungen 2, 5 als ein Netzwerk-Knoten 2 und ein Endgerät 5 ausgebildet. Zum Einkoppeln der modulierten Spannungssignale MS1, MS2 in die Sendeleitung 12 bzw. in die Empfangsleitung 13 hat der Netzwerk-Knoten 2 die Einkoppeleinrichtung 25. Ohne Einschränkung der Allgemeinheit kann der Netzwerk-Knoten 2 zur Kopplung einer Mehrzahl von Endgeräten 5 eine entsprechende Mehrzahl von Einkoppel-Einrichtungen 25 aufweisen.

Das jeweilige Endgerät 5 hat entsprechend eine Auskoppel-Einrichtung 24 zum Auskoppeln des ersten Versorgungs-Spannungssignals VS1 (mittels Auskoppel-Mittel 24a) bzw. des zweiten Versorgungs-Spannungssignals VS2 (mittels Auskoppel-Mittel 24b).

Weiter ist das entsprechende erste Auskoppel-Mittel 24a dazu geeignet, das ausgekoppelte erste Versorgungs-Spannungssignal VS1 den Komponenten oder Einrichtungen 30 des ersten Flugzeugsystems bereitzustellen. Analog ist das zweite Auskoppel-Mittel 24b dazu eingerichtet, das ausgekoppelte zweite Versorgungs-Spannungssignal VS2 den Komponenten oder Einrichtungen 31 des zweiten Flugzeugsystems bereitzustellen.

Weiter sind die Einrichtungen 30, 31 des ersten Flugzeugsystems und des zweiten Flugzeugsystems mit der Auskoppeleinrichtung 24 mittels einer Datenleitung 32 zur Übertragung der Datensignale DS gekoppelt.

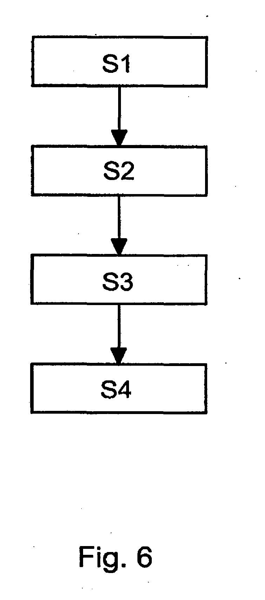

In Fig. 6 ist ein schematisches Ablaufdiagramm eines Ausführungsbeispiels eines Verfahrens zum Übertragen von Daten DS, R1, R2 und Energie VS1, VS2 über Einrichtungen 2-10, beispielsweise Netzwerk-Knoten 2-4, eines bestimmten Netzwerkes 1, beispielsweise eines Ethernet-Netzwerkes, dargestellt.

Nachfolgend wird das erfindungsgemäße Verfahren anhand des Blockschaltbildes in Fig. 6 mit Bezug auf die Fig. 2 bis 4 und 7 bis 10 erläutert.

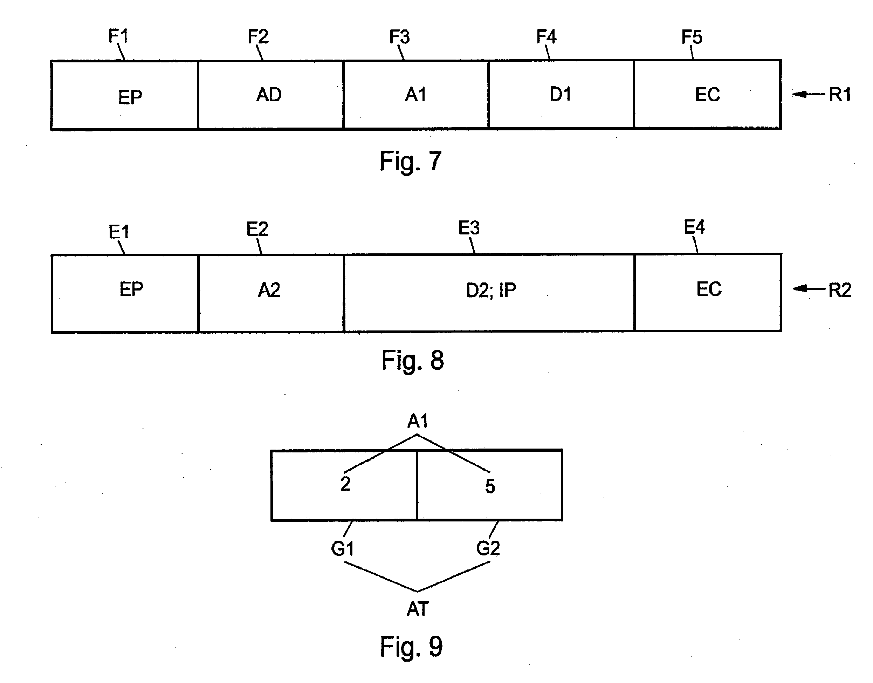

Dabei zeigen die Fig. 7 und 8 schematische Blockschaltbilder von Ausführungsbeispielen eines ersten Rahmens R1 bzw. eines zweiten Rahmens R2 gemäß der Erfindung. Weiter zeigt Fig. 9 ein schematisches Blockschaltbild eines Ausführungsbeispiels eines Adress-Tupels AT des ersten Rahmens R1 gemäß Fig. 7.

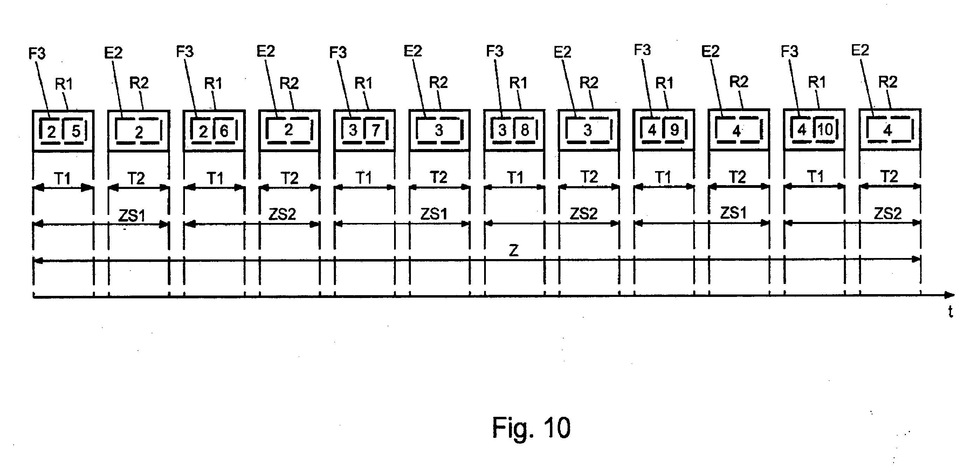

Des Weiteren zeigt Fig. 10 ein schematisches Blockschaltbild eines Ausführungsbeispiels eines zeitlichen Ablaufs der Übertragung der ersten Rahmen R1 und der zweiten Rahmen R2 über den erfindungsgemäßen Bus 11.

Das Ausführungsbeispiel nach Fig. 10 basiert dabei auf dem Ausführungsbeispiel nach Fig. 2 mit den drei Netzwerk-Knoten 2-4. Die beispielhaften Adressen der Adressfelder F3 der ersten Rahmen R1 und der Adressfelder E2 der zweiten Rahmen R2 basieren auf den Bezugszeichen 2-4 der einzelnen Netzwerk-Knoten nach Fig. 2 und der Bezugszeichen 5-10 der einzelnen gekoppelten Endgeräte 5-10 nach Fig. 2. Beispielsweise ist der erste Rahmen R1 des ersten Zeitschlitzes ZS1 für das mit dem Netzwerk-Knoten 2 gekoppelte Endgerät 5 bestimmt.

Details hierzu werden in Bezug auf das erfindungsgemäße Verfahren nach Fig. 6 beschrieben, welches die folgenden Verfahrensschritte S1-S4 aufweist:

### Verfahrensschritt S1:

Zumindest zwei Einrichtungen 2-10 werden mittels eines Busses 11 mit einer Sendeleitung 12 und einer Empfangsleitung 13 gekoppelt. Beispielsweise werden mit Bezug auf Fig. 2 die Netzwerk-Knoten 2-4 mit einer jeweiligen Anzahl gekoppelter Endgeräte 5-10 mittels des Busses 11 (Datenbus) in einer Verkettungs-Anordnung gekoppelt.

### Verfahrensschritt S2:

Es wird die Übertragung von gemäß den bestimmten Netzwerk 1 definierten Daten R1, R2 als Daten-Spannungssignale DS über die Sendeleitung 12 und über die Empfangsleitung 13 gesteuert.

Dabei wird vorzugsweise vorgesehen, die Übertragung von gemäß dem bestimmten Netzwerk 1 definierten ersten Rahmen R1 mit sicherheitsrelevanten Daten D1 und zweiten Rahmen R2 mit nicht-sicherheitsrelevanten Daten D2 in einer vorbestimmten Abfolge als die Daten-Spannungssignale DS über den Bus 11 zu steuern, dabei einen jeweiligen zeitlichen Abstand ZS1-ZS2 von zwei jeweiligen über die Sendeleitung 12 und von zwei jeweiligen über die Empfangsleitung 13 übertragen ersten Rahmen R1 in Abhängigkeit einer bestimmten Abtastrate des Busses 11 durch die gekoppelten Endgeräte 5-10 einzustellen und eine Übertragung zumindest eines jeweiligen zweiten Rahmens R2 über die Sendeleitung 12 und über die Empfangsleitung 13 innerhalb des jeweiligen zeitlichen Abstand ZS1-ZS2 zu steuern.

Die ersten Rahmen R1 sind beispielsweise als CIDS-Rahmen ausgebildet.

Mit Bezug auf Fig. 7 kann der jeweilige erste Rahmen R1 mittels folgender Felder F1-F5 ausgestaltet sein:
- ein erstes Feld F1 mit einer Ethernet-Präambel EP;
- ein zweites Feld F2 mit Audio-Daten AD, insbesondere mit Audio-Broadcasting-Daten;
- ein drittes Feld F3 mit einer Adresse A1, welche zumindest das jeweilige Endgerät 5-10 des jeweiligen Netzwerk-Knotens 2-4 angibt;
- ein viertes Feld F4 mit den sicherheitsrelevanten Daten D1; und
- ein fünftes Feld F5 mit einer Ethernet-Prüfsumme EC, wie beispielsweise einer Ethernet-CRC.

Mit Bezug auf Fig. 9 ist die Adresse A1 des dritten Feldes F3 des ersten Rahmens R1 als ein Adress-Tupel AT ausgebildet, wobei ein erstes Glied G1 des Adress-Tupels AT den jeweiligen Netzwerk-Knoten 2-4 adressiert und ein zweites Glied G2 des Adress-Tupels AT das jeweilige Endgerät 5-10 des jeweiligen Netzwerk-Knotens 2 adressiert. Diese Art der beispielhaften Adressierung ist auch in Fig. 10 - wie oben bereits erläutert - verwendet, so dass das Feld F3 des ersten Rahmens R1 in dem Zeitschlitz ZS1 das Endgerät 5 adressiert, welches mit dem Netzwerk-Knoten 2 gekoppelt ist.

Der jeweilige zweite Rahmen R2 ist vorzugsweise mit Bezug zu Fig. 8 mittels folgender Felder E1-E4 ausgebildet:
- ein erstes Feld E1 mit einer Ethernet-Präambel EP;
- ein zweites Feld E2 mit einer Adresse A2, welche zumindest einen jeweiligen Netzwerk-Knoten 2-4 angibt;
- ein drittes Feld E3 mit einem IP-Datenpaket IP; und
- ein viertes Feld E4 mit einer Ethernet-Prüfsumme EC, beispielsweise einer Ethernet-CRC.

Vorzugsweise ist der jeweilige zeitliche Abstand ZS1-ZS2 als ein Zeitschlitz ZS1-ZS2 ausgebildet, welcher einer Inversen der Abtastrate der Audio-Daten durch die gekoppelten Endgerät 5-10 entspricht.

Weiter hat der jeweilige Zeitschlitz ZS1-ZS2 einen ersten Teil-Zeitschlitz T1 (siehe Fig. 10) zur Übertragung genau eines ersten Rahmens R1 und einen zweiten Teil-Zeitschlitz T2 (siehe Fig. 10) zur Übertragung zumindest eines zweiten Rahmens R2.

Die jeweiligen ersten Rahmen R1 werden vorzugsweise in dem jeweiligen ersten Teil-Zeitschlitz T1 mittels eines statischen und deterministischen Zeitschlitzverfahrens über die Sendeleitung 12 und die Empfangsleitung 13 des Busses 11 übertragen. Demgegenüber werden die jeweiligen zweiten Rahmen R2 in dem jeweiligen zweiten Teil-Zeitschlitz T2 vorzugsweise mittels eines Best-Effort-Verfahrens übertragen.

Mit Bezug auf Fig. 10 kann innerhalb des jeweiligen vorbestimmten Zeitschlitzes ZS1-ZS2 des Zyklus Z mit einer bestimmten Anzahl von Zeitschlitzen ZS1-ZS2 genau ein bestimmtes Endgerät 5-10 eines ersten Rahmens R1 über die Sendeleitung 12 empfangen und genau einen ersten Rahmen R1 über die Empfangsleitung 13 senden.

Vorzugsweise überträgt die Bus-Steuervorrichtung 14 innerhalb eines Zyklus Z mit der Anzahl N2 von Zeitschlitzen ZS1-ZS2 jeweils zumindest einen ersten Rahmen R1 an das jeweilige, mittels des zweiten Gliedes G2 des Adress-Tupels AT des vierten Feldes F4 des ersten Rahmens R1 adressierte Endgerät 5-10 über die Sendeleitung 12 in einem jeweiligen Zeitschlitz ZS1-ZS2 des Zyklus Z.

Der Netzwerk-Knoten 2-4 ist insbesondere in dem jeweiligen Zeitschlitz ZS1-ZS2 des Zyklus Z berechtigt, nach dem Senden des jeweiligen ersten Rahmens R1 des durch das zweite Glied G2 des Adress-Tupels AT des in dem jeweiligen Zeitschlitz ZS1-ZS2 empfangenen ersten Rahmens R1 adressierten Endgerätes 5-10 einen oder mehrere zweite Rahmen R2 mittels des Best-Effort-Verfahrens über die Empfangsleitung 12 zu senden.

Ferner überträgt die Bus-Steuervorrichtung 14 die jeweiligen zweiten Rahmen R2 in einem Broadcast-Modus über den Bus 11, wobei die gekoppelten Netzwerk-Knoten 2-4 jeweils die zweiten Rahmen R2 empfangen, das IP-Paket IP des zweiten Rahmens R2 extrahieren und das IP-Paket IP an das jeweilige, durch eine IP-Adresse des IP-Paketes IP adressierte Endgerät 5-10 weiterleiten, falls das adressierte Endgerät 5-10 mit dem jeweiligen Netzwerk-Knoten 2-4 gekoppelt ist.

Die Berechtigung des jeweiligen Netzwerk-Knotens 2-4 zum Senden der zweiten Rahmen R2 über die Empfangsleitung 13 innerhalb des jeweiligen Zyklus Z wird vorzugsweise mittels einer Einstellung einer Anzahl an diesen jeweiligen Netzwerk-Knoten 2-4 zu übertragenden ersten Rahmen R1 eingestellt.

### Verfahrensschritt S3:

Die Daten-Spannungssignale DS werden auf der Sendeleitung 12 mit zur Spannungsversorgung der Einrichtungen eines ersten Flugzeug-Systems geeigneten ersten Versorgungs-Spannungssignalen VS1 beaufschlagt.

### Verfahrensschritt S4:

Die Daten-Spannungssignale DS werden auf der Empfangsleitung 13 mit zur Spannungsversorgung der Einrichtungen eines zweiten Flugzeugsystems geeigneten zweiten Spannungssignalen VS2 beaufschlagt.

Obwohl die vorliegende Erfindung anhand bevorzugter Ausführungsbeispiele vorliegend beschrieben wurde, ist sie darauf nicht beschränkt, sondern auf vielfältige Weise modifizierbar.

### Bezugszeichenliste

- 1: Netzwerk
- 2-4: Netzwerk-Knoten
- 5-10: Endgerät
- 11: Bus
- 12: Sendeleitung
- 13: Empfangsleitung
- 14: Bus-Steuervorrichtung
- 15-20: Verstärkungseinrichtung
- 21: erstes Mittel
- 22: zweites Mittel
- 23: Not-Spannungsversorgungseinrichtung
- 24: Auskoppeleinrichtung
- 24a: erstes Auskoppel-Mittel
- 24b: zweites Auskoppel-Mittel
- 25: Einkoppeleinrichtung
- 25a: erstes Einkoppel-Mittel
- 25b: zweites Einkoppel-Mittel
- 26: Switch-Einrichtung
- 27: Spannungsversorgungs-Einrichtung
- 28: drittes Mittel
- 29: Datenbus
- 30: Einrichtungen des ersten Flugzeugsystems
- 31: Einrichtungen des zweiten Flugzeugsystems
- 32: Datenleitung
- A1: Adresse
- A2: Adresse
- AD: Audio-Daten
- AT: Adress-Tupel
- BS: Bord-Spannung
- DS: Daten-Spannungssignal
- D1: sicherheitsrelevante Daten
- D2: nicht-sicherheitsrelevante Daten
- E1: erstes Feld des zweiten Rahmens
- E2: zweites Feld des zweiten Rahmens
- E3: drittes Feld des zweiten Rahmens
- E4: viertes Feld des zweiten Rahmens
- EP: Ethernet-Präambel
- EC: Ethernet-Prüfsonde
- F1: erstes Feld des ersten Rahmens
- F2: zweites Feld des ersten Rahmens
- F3: drittes Feld des ersten Rahmens
- F4: viertes Feld des ersten Rahmens
- F5: fünftes Feld des ersten Rahmens
- G1: erstes Glied des Adress-Tupels
- G2: zweites Glied des Adress-Tupels
- IP: IP-Paket
- MS: modifiziertes Spannungssignal
- NS: Not-Spannung
- S1-S5: Verfahrensschritt
- T1: erster Teil-Zeitschlitz
- T2: zweiter Teil-Zeitschlitz
- VS: Versorgungs-Spannungssignal
- Z: Zyklus
- ZS1-ZS2: Zeitschlitz

## Patentansprüche

1. Vorrichtung zum Übertragen von Daten (DS, R1, R2) und Energie (VS) über Einrichtungen (2-10) eines bestimmten Netzwerkes (1) eines Flugzeuges, mit:
a) zumindest zwei Einrichtungen (2-10);
b) einem Bus (11) mit einer Sendeleitung (12) und einer Empfangsleitung (13), welcher die Einrichtungen (2-10) koppelt;
c) einer mit dem Bus (11) gekoppelten Bus-Steuervorrichtung (14), welche aufweist:
ein erstes Mittel (21), welches dazu eingerichtet ist, eine Übertragung von gemäß dem bestimmten Netzwerk (1) definierten Daten als Daten-Spannungssignale (DS) über die Sendeleitung (12) und über die Empfangsleitung (13) zu steuern,
ein zweites Mittel (22), welches dazu eingerichtet ist, die Daten-Spannungssignale (DS) auf der Sendeleitung (12) mit zur Spannungsversorgung der Einrichtungen eines ersten Flugzeug-Systems geeigneten ersten Versorgungs-Spannungssignalen (VS1) zu beaufschlagen, und
ein drittes Mittel (28), welches dazu eingerichtet ist, die Daten-Spannungssignale (DS) auf der Empfangsleitung (13) mit zur Spannungsversorgung der Einrichtungen eines zweiten Flugzeugsystems geeigneten zweiten Versorgungs-Spannungssignalen (VS2) zu beaufschlagen.

2. Vorrichtung nach Anspruch 1,
**dadurch gekennzeichnet,**
dass die zumindest zwei Einrichtungen (2-10) als zumindest zwei Netzwerk-Knoten (2-4) oder als zumindest ein Netzwerk-Knoten (2-4) und zumindest ein gekoppeltes Endgerät (5-10) ausgebildet sind.

3. Vorrichtung nach Anspruch 1 oder 2,
**dadurch gekennzeichnet,**
dass die zumindest zwei Einrichtungen (2-10) eine Mehrzahl von Netzwerk-Knoten (2-4) mit einer jeweiligen Anzahl gekoppelter Endgeräte (5-10) umfassen.

4. Vorrichtung nach Anspruch 1, 2 oder 3,
**dadurch gekennzeichnet,**
dass das erste Flugzeugsystem eine höhere Sicherheitsstufe und das zweite Flugzeugsystem eine niedrigere Sicherheitsstufe hat.

5. Vorrichtung nach Anspruch 4,
**dadurch gekennzeichnet,**
dass das erste Flugzeugsystem als ein Kabinen-Management-System des Flugzeuges und das zweite Flugzeugsystem als ein Leselampen-System mit Leselampen in der Kabine des Flugzeuges ausgebildet ist.

6. Vorrichtung nach einem der Ansprüche 1 bis 5,
**dadurch gekennzeichnet,**
dass das erste Mittel (21) dazu eingerichtet ist, die Übertragung von gemäß dem bestimmten Netzwerk (1) definierten ersten Rahmen (R1) mit sicherheitsrelevanten Daten (D1) und zweiten Rahmen (R2) mit nicht-sicherheitsrelevanten Daten (D2) in einer vorbestimmten Abfolge als die Daten-Spannungssignale (DS) über den Bus (11) zu steuern, dabei einen jeweiligen zeitlichen Abstand (ZS1-ZS2) von zwei jeweiligen über die Sendeleitung (12) und von zwei jeweiligen über die Empfangsleitung (13) übertragen ersten Rahmen (R1) in Abhängigkeit einer bestimmten Abtastrate der Audio-Daten durch die gekoppelten Endgeräte (5-10) einzustellen und eine Übertragung zumindest eines jeweiligen zweiten Rahmens (R2) über die Sendeleitung (12) und über die Empfangsleitung (13) innerhalb des jeweiligen zeitlichen Abstandes (ZS1-ZS2) zu steuern.

7. Vorrichtung nach einem der Ansprüche 1 bis 6
**dadurch gekennzeichnet,**
dass die Netzwerk-Knoten (5-10) jeweilige Verstärkungs-Einrichtungen (15-20) zur Verstärkung der Signale auf der Sendeleitung (12) und der Empfangsleitung (13) aufweisen, wobei das zweite Mittel (22) die ersten Versorgungs-Spannungssignale (VS1) derart ausbildet, dass diese zur Spannungsversorgung der Verstärkungs-Einrichtungen (15-20) der Netzwerk-Knoten (2-4) geeignet sind.

8. Vorrichtung nach Anspruch 7,
**dadurch gekennzeichnet,**
dass das zweite Mittel (22) die ersten Versorgungs-Spannungssignale (VS1) derart bereitstellt, dass diese zur Spannungsversorgung der Verstärkungs-Einrichtungen (15-20) der Netzwerk-Knoten (2-4) und einer bestimmten Auswahl der gekoppelten Endgeräte (5-10), welche zu dem ersten Flugzeugsystem zugehörig sind, geeignet sind.

9. Vorrichtung nach einem der Ansprüche 1 bis 8,
**dadurch gekennzeichnet,**
dass das zweite Mittel (22) die von dem ersten Mittel (21) bereitgestellten Daten-Spannungssignale (DS) den ersten Versorgungs-Spannungssignalen (VS1) zur Ausbildung erster modulierter Spannungssignale (MS1) überlagert und die ersten modulierten Spannungssignale (MS1) in die Sendeleitung (12) einkoppelt.

10. Vorrichtung nach einem der Ansprüche 1 bis 9,
**dadurch gekennzeichnet,**
dass das dritte Mittel (28) die von dem ersten Mittel (21) bereitgestellten Daten-Spannungssignale (DS) den zweiten Versorgungs-Spannungssignalen (VS2) zur Ausbildung zweiter modulierter Spannungssignale (MS2) überlagert und die zweiten modulierten Spannungssignale (MS2) in die Empfangsleitung (13) einkoppelt.

11. Vorrichtung nach den Ansprüchen 9 und 10,
**dadurch gekennzeichnet,**
dass die jeweilige Einrichtung (2-10) eine Auskoppeleinrichtung (24) aufweist, welche ein erstes Auskoppel-Mittel (24a) und ein zweites Auskoppel-Mittel (24b) hat,
wobei das erste Auskoppel-Mittel (24a) dazu eingerichtet ist, die ersten Versorgungs-Spannungssignale (VS1) aus den über die Sendeleitung (12) übertragenen, ersten modulierten Spannungssignalen (MS1) auszukoppeln, und
wobei das zweite Auskoppel-Mittel (24b) dazu eingerichtet ist, die zweiten Versorgungs-Spannungssignale (VS2) aus den über die Empfangsleitung (13) übertragenen, zweiten modulierten Spannungssignalen (MS2) auszukoppeln.

12. Vorrichtung nach Anspruch 11,
**dadurch gekennzeichnet,**
dass der jeweilige Netzwerk-Knoten (2-4) eine Einkoppeleinrichtung (25) aufweist, welche ein erstes Einkoppel-Mittel (25a) und ein zweites Einkoppel-Mittel (25b) hat,
wobei das erste Einkoppel-Mittel (25a) dazu eingerichtet ist, die von dem ersten Auskoppel-Mittel (24a) ausgekoppelten ersten Versorgungs-Spannungssignale (VS1) zur Übertragung an den jeweiligen nachgeschalteten Netzwerk-Knoten (3, 4) in die Sendeleitung (12) einzukoppeln, und
wobei das zweite Einkoppel-Mittel (25b) dazu eingerichtet ist, die von dem zweiten Auskoppel-Mittel (25a) ausgekoppelten zweiten Versorgungs-Spannungssignale (VS2) zur Übertragung an den jeweiligen nachgeschalteten Netzwerk-Knoten (3, 4) in die Empfangsleitung (13) einzukoppeln.

13. Vorrichtung nach einem der Ansprüche 1 bis 12,
**dadurch gekennzeichnet,**
dass das zweite Mittel (22) und das dritte Mittel (28) der Bus-Steuervorrichtung (14) zur Energieversorgung mit einer Not-Spannungsversorgungseinrichtung (23) des Flugzeuges gekoppelt sind.

14. Verfahren zum Übertragen von Daten (DS, R1, R2) und Energie (VS1, VS2) über Einrichtungen (2-10) eines bestimmten Netzwerkes (1) eines Flugzeuges, mit den Schritten:
a) Koppeln von zumindest zwei Einrichtungen (2-10) mittels eines Busses (11) mit einer Sendeleitung (12) und einer Empfangsleitung (13);
b) Steuern einer Übertragung von gemäß dem bestimmten Netzwerk (1) definierten Daten als Daten-Spannungssignale (DS) über die Sendeleitung (12) und über die Empfangsleitung (13);
c) Beaufschlagen der Daten-Spannungssignale (DS) auf der Sendeleitung (12) mit zur Spannungsversorgung der Einrichtungen eines ersten Flugzeug-Systems geeigneten ersten Versorgungs-Spannungssignalen (VS1); und
d) Beaufschlagen der Daten-Spannungssignale (DS) auf der Empfangsleitung (13) mit zur Spannungsversorgung der Einrichtungen eines zweiten Flugzeugsystems geeigneten zweiten Versorgungs-Spannungssignalen (VS2).

## Claims

1. Device for transmitting data (DS, R1, R2) and energy (VS) via installations (2-10) of a particular network (1) of an aeroplane, comprising:
a) at least two installations (2-10);
b) a bus (11), which comprises a transmission line (12) and a receiving line (13) and which couples the installations (2-10);
c) a bus control device (14), which is coupled to the bus (11) and which comprises:
• a first means (21), which is set up to control transmission of data, defined in accordance with the particular network (1), as data voltage signals (DS) via the transmission line (12) and via the receiving line (13),
• a second means (22), which is set up to load the data voltage signals (DS) on the transmission line (12) with first supply voltage signals (VS1) suitable for supplying power to the installations of a first aeroplane system, and
• a third means (28), which is set up to load the data voltage signals (DS) on the receiving line (13) with second supply voltage signals (VS2) suitable for supplying power to the installations of a second aeroplane system.

2. Device according to claim 1, **characterised in that** the at least two devices (2-10) are in the form of at least two network nodes (2-4) or of at least one network node (2-4) and at least one coupled terminal (5-10).

3. Device according to either claim 1 or claim 2, **characterised in that** the at least two devices (2-10) comprise a plurality of network nodes (2-4) having a respective number of coupled terminals (5-10).

4. Device according to claim 1, 2 or 3, **characterised in that** the first aeroplane system has a higher security level and the second aeroplane system has a lower security level.

5. Device according to claim 4, **characterised in that** the first aeroplane system is in the form of a cabin management system of the aeroplane and the second aeroplane system is in the form of a reading lamp system comprising reading lamps in the cabin of the aeroplane.

6. Device according to any of claims 1 to 5, **characterised in that** the first means (21) is set up to control the transmission of first frames (R1) comprising security-related data (D1) and second frames (R2) comprising non-security-related data (D2), said frames being defined in accordance with the particular network (1), via the bus (11) in a predetermined sequence as the data voltage signals (DS), in the process to set a respective time interval (ZS1-ZS2) of two respective first frames (R1) transmitted via the transmission line (12) and two respective ones transmitted via the receiving line (13) as a function of a particular sampling rate of the audio data by the coupled terminal (5-10), and to control transmission of at least one respective second frame via the transmission line (12) and via the receiving line (13) within the respective time interval (ZS1-ZS2).

7. Device according to any of claims 1 to 6, **characterised in that** the network nodes (5-10) comprise respective amplifying installations (15-20) for amplifying the signals on the transmission line (12) and the receiving line (13), the second means (22) forming the first supply voltage signals (VS1) in such a way that they are suitable for supplying power to the amplifying installations (15-20) of the network nodes (2-4).

8. Device according to claim 7, **characterised in that** the second means (22) provides the first supply voltage signals (VS1) in such a way that they are suitable for supplying power to the amplifying installations (15-20) of the network nodes (2-4) and of a particular selection of the coupled terminals (5-10) which are associated with the first aeroplane system.

9. Device according to any of claims 1 to 8, **characterised in that** the second means (22) superposes the data voltage signals (DS) provided by the first means (21) on the first supply voltage signals (VS1) to form first modulated voltage signals (MS1) and couples the first modulated voltage signals (MS1) into the transmission line (12).

10. Device according to any of claims 1 to 9, **characterised in that** the third means (28) superposes the data voltage signals (DS) provided by the first means (21) on the second supply voltage signals (VS2) to form second modulated voltage signals (MS2) and couples the second modulated voltage signals (MS2) into the receiving line (13).

11. Device according to claims 9 and 10, **characterised in that** the respective installation (2-10) comprises a coupling-out installation (24), which has a first coupling-out means (24a) and a second coupling-out means (24b),
the first coupling-out means (24a) being set up to couple the first supply voltage signals (VS1) from the first modulated voltage signals (MS1) transmitted via the transmission line (12), and
the second coupling-out means (24b) being set up to couple out the second power voltage signals (VS2) from the second modulated voltage signals (MS2) transmitted via the receiving line (13).

12. Device according to claim 11, **characterised in that** the respective network node (2-4) comprises a coupling-in installation (25), which has a first coupling-in means (25a) and a second coupling-in means (25b),
the first coupling-in means (25a) being set up to couple the first supply voltage signals (VS1), coupled out by the first coupling-out means (24a), into the transmission line (12) for transmission to the respective downstream network node (3, 4), and
the second coupling-in means (25b) being set up to couple the second supply voltage signals (VS2), coupled out by the second coupling-out means (25a), into the receiving line (13) for transmission to the respective downstream network node (3, 4).

13. Device according to any of claims 1 to 12, **characterised in that** for power supply the second means (22) and the third means (28) of the bus control device (14) are coupled to an emergency power supply device (23) of the aeroplane.

14. Method for transmitting data (DS, R1, R2) and energy (VS1, VS2) via installations (2-10) of a particular network (1) of an aeroplane, comprising the steps of:
a) coupling at least two installations (2-10) to a transmission line (12) and a receiving line (13) by means of a bus (11);
b) controlling transmission of data, which are defined in accordance with the particular network (1), via the transmission line (12) and via the receiving line (13) in the form of data voltage signals (DS);
c) loading the data voltage signals (DS) on the transmission line (12) with first supply voltage signals (VS1) suitable for supplying power to the installations of a first aeroplane system; and
d) loading the data voltage signals (DS) on the receiving line (13) with second supply voltage signals (VS2) suitable for supplying power to the installations of a second aeroplane system.

## Revendications

1. Dispositif de transmission de données (DS, R1, R2) et d'énergie (VS) par l'intermédiaire d'équipements (2-10) d'un réseau déterminé (1) d'un avion, comprenant :
a) au moins deux équipements (2-10) ;
b) un bus (11), comportant une ligne d'émission (12) et une ligne de réception (13), lequel bus couple les équipements (2-10) ;
c) un système de commande de bus (14) couplé au bus (11) et qui présente :
• un premier moyen (21) qui est agencé pour commander une transmission de données définies selon le réseau déterminé (1) sous la forme de signaux de tension de données (DS) sur la ligne d'émission (12) et sur la ligne de réception (13),
• un deuxième moyen (22) qui est agencé pour alimenter les signaux de tension de données (DS) sur la ligne d'émission (12) avec des premiers signaux de tension d'alimentation (VS1) adaptés à alimenter en tension les équipements d'un premier système d'avion, et
• un troisième moyen (28) qui est agencé pour alimenter les signaux de tension de données (DS) sur la ligne de réception (13) avec des seconds signaux de tension d'alimentation (VS2) adaptés à alimenter en tension les équipements d'un second système d'avion.

2. Dispositif selon la revendication 1, **caractérisé en ce que** les au moins deux équipements (2-10) sont réalisés sous la forme d'au moins deux noeud de réseau (2-4) ou d'au moins un noeud de réseau (2-4) et d'au moins une borne terminale couplée (5-10).

3. Dispositif selon la revendication 1 ou 2, **caractérisé en ce que** les au moins deux équipements (2-10) comprennent une pluralité de noeuds de réseau (2-4) avec un nombre respectif de bornes terminales couplées (5-10).

4. Dispositif selon la revendication 1, 2 ou 3, **caractérisé en ce que** le premier système d'avion a un niveau de sécurité plus élevé et le second système d'avion a un niveau de sécurité plus faible.

5. Dispositif selon la revendication 4, **caractérisé en ce que** le premier système d'avion est réalisé sous la forme d'un système de gestion de cabine de l'avion et le second système d'avion sous la forme d'un système de lampes liseuses avec des lampes liseuses dans la cabine de l'avion.

6. Dispositif selon une des revendications 1 à 5, **caractérisé en ce que** le premier moyen (21) est agencé pour commander par l'intermédiaire du bus (11) la transmission de premiers cadres (R1) définis selon le réseau (1) déterminé avec des données associées à la sécurité (D1) et de seconds cadres (R2) avec des données non associées à la sécurité (D2) dans une séquence prédéterminée sous la forme de signaux de tension de données (DS), pour régler ainsi un intervalle de temps respectif (ZS1-ZS2) de deux premiers cadres (R1) respectifs transmis par la ligne d'émission (12) et de deux premiers cadres (R1) respectifs transmis par la ligne de réception (13) en fonction d'un taux d'échantillonnage déterminé de données audio par les bornes terminales couplées (5-10) et pour commander une transmission d'au moins un second cadre respectif (R2) sur la ligne d'émission (12) et sur la ligne de réception (13) à l'intérieur de l'intervalle de temps respectif (ZS1-ZS2).

7. Dispositif selon une des revendications 1 à 6 **caractérisé en ce que** les noeuds de réseau (5-10) présentent des équipements d'amplification respectifs (15-20) destinés à amplifier les signaux sur la ligne d'émission (12) et la ligne de réception (13), le deuxième moyen (22) formant les premiers signaux de tension d'alimentation (VS1) de telle sorte que ceux-ci soient adaptés à alimenter en tension les équipements d'amplification (15-20) des noeuds de réseau (2-4).

8. Dispositif selon la revendication 7, **caractérisé en ce que** le deuxième moyen (22) fournit les premiers signaux de tension d'alimentation (VS1) de telle sorte que ceux-ci soient adaptés à alimenter en tension les équipements d'amplification (15-20) des noeuds de réseau (2-4) et un nombre déterminé de bornes terminales couplées (5-10) qui sont associées au premier système d'avion.

9. Dispositif selon une des revendications 1 à 8, **caractérisé en ce que** le deuxième moyen (22) superpose aux premiers signaux de tension d'alimentation (VS1) les signaux de tension de données (DS) fournis par le premier moyen (21) pour former des premiers signaux de tension modulés (MS1) et couple les premiers signaux de tension modulés (MS1) dans la ligne d'émission (12).

10. Dispositif selon une des revendications 1 à 9, **caractérisé en ce que** le troisième moyen (28) superpose aux seconds signaux de tension d'alimentation (VS2) les signaux de tension de données (DS) fournis par le premier moyen (21) pour former des seconds signaux de tension modulés (MS2) et envoie les seconds signaux de tension modulés (MS2) dans la ligne de réception (13).

11. Dispositif selon les revendications 9 et 10, **caractérisé en ce que** l'équipement respectif (2-10) présente un équipement de découplement (24) qui a un premier moyen de découplement (24a) et un second moyen de découplement (24b),
le premier moyen de découplement (24a) étant agencé pour découpler les premiers signaux de tension d'alimentation (VS1) à partir des premiers signaux de tension modulés (MS1) transmis par la ligne d'émission (12) et
le second moyen de découplement (24b) étant agencé pour découpler les seconds signaux de tension d'alimentation (VS2) à partir des seconds signaux de tension modulés (MS2) transmis par la ligne de réception (13).

12. Dispositif selon la revendication 11, **caractérisé en ce que** le noeud de réseau respectif (2-4) présente un équipement d'accouplement (25) qui a un premier moyen d'accouplement (25a) et un second moyen d'accouplement (25b),
le premier moyen d'accouplement (25a) étant agencé pour coupler les premiers signaux de tension d'alimentation (VS1) découplés par le premier moyen de découplement (24a) pour une transmission sur les noeuds de réseaux respectivement connectés en aval (3, 4) dans la ligne d'émission (12) et
le second moyen d'accouplement (25b) étant agencé pour coupler les seconds signaux de tension d'alimentation (VS2) découplés par le second moyen de découplement (25a) pour une transmission sur les noeuds de réseaux respectivement connectés en aval (3, 4) dans la ligne de réception (13).

13. Dispositif selon une des revendications 1 à 12, **caractérisé en ce que** le deuxième moyen (22) et le troisième moyen (28) du système de commande de bus (14) sont couplés, pour l'alimentation en énergie, à un équipement d'alimentation en tension de secours (23) de l'avion.

14. Procédé de transmission de données (DS, R1, R2) et d'énergie (VS1, VS2) par l'intermédiaire d'équipements (2-10) d'un réseau déterminé (1) d'un avion, comprenant les étapes consistant à :
a) coupler au moyen d'un bus (11) au moins deux équipements (2-10) à une ligne d'émission (12) et à une ligne de réception (13) ;
b) commander une transmission de données définies selon le réseau déterminé (1) sous la forme de signaux de tension de données (DS) sur la ligne d'émission (12) et sur la ligne de réception (13) ;
c) alimenter les signaux de tension de données (DS) sur la ligne d'émission (12) avec des premiers signaux de tension d'alimentation (VS1) destinés à alimenter en tension les équipements d'un premier système d'avion ; et
d) alimenter les signaux de tension de données (DS) sur la ligne de réception (13) avec des seconds signaux de tension d'alimentation (VS2) destinés à alimenter en tension les équipements d'un second système d' avion.
